# EUROPEAN PATENT SPECIFICATION

(11) **EP 4 503 533 B1**
(45) Date of publication and mention of the grant of the patent: **30.09.2026**
(21) Application number: 23822952.0
(22) Date of filing: 02.06.2023
(51) Int. Cl.: H04L 67/025, H04L 67/12, H04L 67/00, H04L 41/0816, H04L 41/12, H04L 41/22, H04L 43/106

(54) **DATA SERVER AND WIRELESS ACCESS POINT OF A MONITORING SYSTEM AND DATA INTERACTION METHODS THEREFOR**
DATENSERVER UND DRAHTLOSER ZUGANGSPUNKT EINES ÜBERWACHUNGSSYSTEMS SOWIE VERFAHREN ZUR DATENINTERAKTION DAFÜR
SERVEUR DE DONNÉES ET POINT D'ACCÈS SANS FIL D'UN SYSTÈME DE SURVEILLANCE, AINSI QUE DES MÉTHODES D'INTERACTION DE DONNÉES ASSOCIÉES

(30) Priority: 14.06.2022 CN 202210669833
(43) Date of publication of application: 05.02.2025
(73) Proprietor: Shenzhen Mindray Bio-Medical Electronics Co., Ltd., Shenzhen, Guangdong 518057 (CN)
(72) Inventor: CHEN, Changgen, Shenzhen, Guangdong 518057 (CN); XU, Li, Shenzhen, Guangdong 518057 (CN); YANG, Zhigang, Shenzhen, Guangdong 518057 (CN)
(74) Representative: KIPA AB
(86) International application number: PCT/CN2023/098040
(87) International publication number: WO 2023/241383

(56) References cited:
- WO-A1-2020/199167
- WO-A1-2021/227053
- WO-A1-2021/253427
- CN-A- 101 803 951
- CN-A- 106 686 635
- CN-A- 106 850 855
- CN-A- 113 452 736
- US-A1- 2024 197 179

## Description

### TECHNICAL FIELD

The disclosure relates to a technical field of medical device, and more particularly to a monitoring system and a data interaction method thereof, a data server and a data interaction method thereof, and a wireless access point and a data interaction method thereof.

### BACKGROUND

Traditional monitoring system usually consists of a monitoring device, a network device and a central monitoring device. The monitoring device can acquire physiological parameters of patient, such as ECG, SPO2, NIBP, Resp and so on, and transmit information to the central monitoring device through the network device. A movement of a patient around bed has a positive effect on recovery of the patient. In order to reduce restrictions on the movement of the patient and ensure normal monitoring during the movement, it is necessary to remove cable connection between devices, that is, the monitoring device needs to have a wireless transmission function, so as to wirelessly transmit the physiological parameters of the patient to the central monitoring device. The central monitoring device can also transmit some information to the patient monitoring device through wireless transmission, so as to implement bidirectional communication. Therefore, the function of the network device is to realize wireless bidirectional communication between the monitoring device and the central monitoring device.

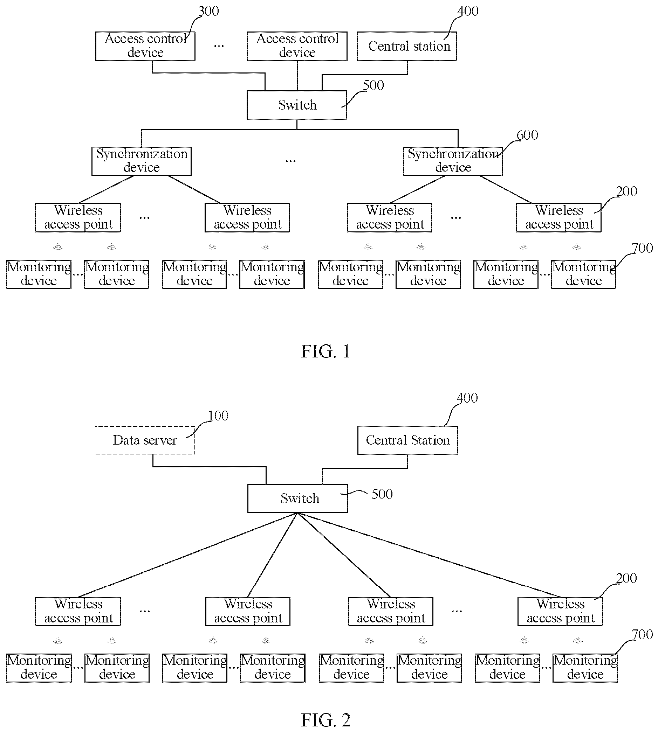

As shown in FIG. 1, a currently network device generally includes a wireless access point 200 (AP, Access Point), an access control device 300 (AC, Access Client), a switch 500, a synchronization device 600 (Sync), etc. For a slightly larger site, multiple groups of devices need to be superimposed to achieve a large-scale monitoring. Wherein, AC is mainly responsible for management of AP and information interaction between AP and central monitoring device; Sync is mainly responsible for providing a reference clock synchronization reference for the information interaction between connected AP and AC. Time synchronization is beneficial to improving wireless performance and ensuring the reliability of wireless connection, when the patient moves.

Traditional monitoring system has following shortcomings when facing multi-department and whole-hospital coverage scenarios. 1. Traditional AC is responsible for wireless device management, and task data parsing and distribution. The more complex the task data, the greater load of the AC, which results in that multiple ACs are required in a network deployment, and each AC can only connect to a small number of APs. In this way, the network architecture involves many modules and occupies a large space. 2. Traditional monitoring system has a poor scalability, and additional ACs are required for upgrades and expansions. 3. Traditional monitoring system has high overall cost, and complex management and maintenance.

WO2021253427A1 discloses a wireless medical device, a central monitoring station, and a wireless medical monitoring system and method.

WO2021227053A1 discloses a patient monitor communicatively connected with at least one medical device and a device management server.

### SUMMARY

The invention is as defined in claims 1-13.

The monitoring system of the above embodiment processes the monitoring data and the management data separately, that is, functions of the original access control device are reasonably separated, thereby reducing hardware requirements of device that realize AC functions in the monitoring system. In the above monitoring system, there is no need to set up a special device or less special devices are needed to perform tasks of the access control device, thereby reducing a device number of monitoring devices, reducing costs and space, and facilitating maintenance.

### BRIEF DESCRIPTION OF THE DRAWINGS

FIG. 1 is a composition diagram of an existing monitoring system.
FIG. 2 is composition diagram of a monitoring system according to an embodiment.
FIG. 3 is a diagram of interaction between a data server and a wireless access point according to an embodiment;
FIG. 4 is a flow chart of a data interaction method for a data server according to an embodiment;
FIG. 5 is a flow chart of a data interaction method for a wireless access point according to an embodiment.

100. Data server;
120. First communication module; 140. task processing module; 160. device management module; 180. first clock synchronization module;
200. Wireless access point;
220. Second communication module; 240. data processing module; 260. configuration module; 280. second clock synchronization module;
300. Access control device;
400. Central Station;
500. Switch;
600. Time synchronization device;
700. Monitoring device.

### DESCRIPTION OF THE PREFERRED EMBODIMENTS

This disclosure is further described in detail below through specific embodiments in combination with the accompanying drawings. In different embodiments, similar elements adopt associated similar reference numbers. In the following embodiments, many details are described in order to make this disclosure better understood. However, one skilled in the art can easily recognize that some of the features can be omitted in different cases, or can be replaced by other elements, materials and methods. In some cases, some operations related to this disclosure are not shown or described in the description, in order to avoid the core part of this disclosure being inundated by too many descriptions. For one skilled in the art, it is not necessary to describe these related operations in detail, as they can fully understand the relevant operations according to the description in this disclosure and the general technical knowledge in the art.

In addition, the features, operations, or characteristics described in the description may be combined in any appropriate manner to form various embodiments. At the same time, the steps or actions in the method description can also be exchanged or adjusted sequentially in a manner obvious to one skilled in the art. Therefore, the various sequences in the description and the drawings are only for the purpose of clearly describing a certain embodiment, and do not mean that they are necessary sequences. Unless it is otherwise specified that one of the sequences must be followed.

The terms "first", "second", etc. in the description are operable to distinguish different objects, rather than to describe a specific order. In addition, the terms "connection", and "linkage" mentioned in this disclosure include direct and indirect connection (linkage), unless otherwise specified.

This disclosure designs a management function for wireless device, and a data parsing and distribution function in AC as two independent components that can be deployed in a single-chip microcomputer or a server, thereby realizing a flat monitoring system.

Please refer to FIG. 2. In an embodiment shown in FIG. 2, a monitoring system is provided. The monitoring system includes a plurality of monitoring devices 700, a plurality of wireless access points 200, and a data server 100, which are in communicative connection. In this embodiment, the monitoring device 700 is in wireless connection with the wireless access point 200, and the plurality of wireless access points 200 and the data server 100 can be connected through at least one switch 500, such as a two-layer switch, a three-layer switch or a POE switch. The switch 500 may establish and/or store a MAC address table, an ARP table, etc.

In this embodiment, the monitoring device 700 is configured to obtain monitoring data of a patient, which data includes but is not limited to a physiological parameter, such as heart rate, blood oxygen, and pulse, or a ventilation parameter, such as an airway pressure and an esophageal pressure. That is, the monitoring device 700 can be a monitor, ventilator, anesthesia machine and other devices in the field, and the monitoring device 700 can transmit monitoring data to outside in a wireless and/or wired manner.

The wireless access point 200 is configured to receive the monitoring data which is transmitted by at least one monitoring device 700, that is, one wireless access point 200 can simultaneously receive monitoring data which is transmitted by one or more monitoring devices 700. After obtaining the monitoring data, the wireless access point 200 may encapsulate the monitoring data to obtain a first protocol packet, which may include a preset segment. For example, each monitoring device 700 has a corresponding device identifier, which may represent information such as a type of the monitoring device 700 and the likes. The first protocol packet may include a plurality of device identifier segments, and each device identifier segment includes a plurality of character bits (each segment hereinafter may also include a plurality of character bits, and a plurality of continuous character bits form a character string), and a value of each character bit is set to 0 or 1. A device identifier of one monitoring device 700 is represented by a character string in one device identifier segment. Each device identifier segment may be followed by a monitoring data segment, and monitoring data which corresponds to the monitoring device 700 is stored in the monitoring data segment. One first protocol packet may also include an access point identifier segment, and a character string in the access point identifier segment may be used to represent information of the wireless access point 200, such as at least one of a brand, model, mac address, IP address and communication channel of the wireless access point 200.

In addition to the monitoring data, the wireless access point 200 can also obtain its own operation state in real time or periodically or according to a preset rule. The operation state includes but is not limited to a connection state between the wireless access point 200 and the monitoring device 700, whether the wireless access point 200 itself is operating normally, and other information. Then the wireless access point 200 generates management data according to the operation state, encapsulates the management data to obtain a second protocol packet, wherein the second protocol packet may include a management data segment, and the access point identifier segment mentioned above. A structure of the management data segment may be similar to that of the above-mentioned monitoring data segment.

In some embodiments, one of the first protocol packet and the second protocol packet may include the other, for example, the first protocol packet includes a segment which is the second protocol packet, then the monitoring data and the management data are equivalent to layered data. After obtaining the first protocol packet and the second protocol packet, the wireless access point 200 may transmit the two protocol packets to the data server 100.

In addition to transmitting data to the data server 100, the wireless access point 200 can also receive configuration information which is transmitted by the data server 100 and complete its own configuration according to the configuration information. For example, various functions can be configured according to the configuration information. The configuration of these functions is usually completed on the AC device in the prior art. In this embodiment, these configurations can be completed on the data server 100.

In this embodiment, the data server 100 is a central station 400, also known as a central monitoring device. The data server 100 is configured to decapsulate the first protocol packet to obtain monitoring data, decapsulate the second protocol packet to obtain management data, and obtain configuration information, and transmit the configuration information to each wireless access point 200. Since in this embodiment, the data server 100 is the central station 400, after obtaining the monitoring data and the management data, the central station 400 can also display the monitoring data and/or the management data on its own display screen. Moreover, the central station 400 can be connected with various external devices, such as a keyboard and a mouse, etc., and the user can directly input the configuration information into the central station 400.

From the above description, it can be seen that the monitoring system of this disclosure does not require an additional AC device, and the central station 400 can undertake the functions of the original AC device. The reason for why this can be achieved is that the current design trend of the monitoring system is low coupled and highly cohesive. The monitoring data and the management data are not layered but are packaged and transmitted together. Although this can reduce redundancy and bandwidth, however a higher hardware requirement for the end that receives and parses the data, is proposed. Therefore, a special AC device is usually required to be responsible for data parsing and management of AP device. In this embodiment, the monitoring data and the management data are layered, or divided into two different protocol packets. The data server 100 can decapsulate the two protocol packets respectively, so that the hardware requirement on the data server 100 is reduced. Therefore, the central station 400 of the monitoring system in this embodiment can be used as a "virtual AC device" to be responsible for data parsing and management of wireless access point 200. The advantage of this monitoring system is that it can eliminate the requirement for AC device, or can reduce the number of required AC devices. The central station 400 and the wireless access point 200 are directly connected via the switch 500, thereby flattening the entire monitoring system.

In some embodiments, the data server 100 may not be the central station 400, but may be any independent device with processing capabilities, which device is connected with a local area network (referring to a local area network where the switch 500 is arranged). Said device may not be a specially manufactured AC device, but has a processor that can execute programs. The processor can realize the function of a virtual AC. When the data server 100 is not the central station 400, after the data server 100 decapsulates the monitoring data, the data server 100 also transmits the monitoring data to the central station 400 in the monitoring system for viewing by medical staff at the central station 400. In addition, the monitoring system in this embodiment can also be connected with the access control device 300, and the access control device 300 manages some wireless access points 200, so that the monitoring system in this embodiment has a good scalability.

In current monitoring systems, a time synchronization device 600 (Sync device) is often set up to be responsible for time synchronization. The time synchronization device 600 mainly provides a clock synchronization reference for information interaction between the AP device and the AC device which are connected with the time synchronization device 600. Time synchronization is beneficial to improving wireless performance and reliability of wireless connection, when the patient moves. However, in the current monitoring system, the number of AP devices which are connected with the time synchronization device 600 is limited, so that a plurality of time synchronization devices 600 are required. If distances between the time synchronization devices 600 and the AP device, and between the time synchronization devices 600 and the switch 500 are too long, the time synchronization devices 600 are needed to be cascaded to ensure a requirement for clock accuracy, which also leads to an excessive number of time synchronization devices 600 and occupies a large space.

In some embodiments of this disclosure, the data server 100 itself can also serve as the time synchronization device 600. In this way, a separate time synchronization device 600 is not required. The data server 100 can generate synchronization information (or defined as a protocol packet), which carries a timestamp according to local time of the data server 100, and transmit the synchronization information to the wireless access point 200, wherein the timestamp is jointly generated by software and hardware, the software carries coarse synchronization, and the hardware carries fine synchronization. The wireless access point 200 parses the synchronization information to obtain the timestamp, and calibrates local time of the wireless access point 200 according to the timestamp. In this way, it is equivalent to that the data server 100 itself integrates the software function of time synchronization.

In addition, in the current monitoring system, the reference for clock synchronization is transmitted by the time synchronization device 600 in a form of synchronization information which carries a timestamp, and each wireless access point 200 can only passively calibrate local time according to the timestamp inside the synchronization information. In this embodiment, each wireless access point 200 has the function of generating synchronization information.

The data server 100 can select one of the plurality of wireless access points 200 as a primary synchronization access point according to a preset rule, and select other wireless access points 200 among the plurality of wireless access points 200 as secondary synchronization access points. For example, the data server 100 transmits a selection instruction to a wireless access point 200 with a smallest MAC address to set said wireless access point 200 as a primary synchronization access point. Said wireless access point 200 that receives the selection instruction, generates synchronization information which carries a timestamp according to its own local time, and transmits the synchronization information to secondary synchronization access points. The secondary synchronization access points parse the synchronization information to obtain the timestamp and calibrate their local time according to the timestamp. By setting the time synchronization function in the wireless access point 200 as described above, the time synchronization device 600 can also be omitted.

In some embodiments, the data server 100 can monitor whether the synchronization information exists in the local area network. If no synchronization information exist, the data server 100 transmits the synchronization information by itself or designates a primary synchronization access point to transmit the synchronization information. This can improve the scalability of the monitoring system of this embodiment. For example, when the monitoring system of this embodiment is assembled, the switch 500 can also be connected with the time synchronization device 600. When the system starts operation, after the data server 100 receives the synchronization information from the time synchronization device 600, the data server 100 or the wireless access point 200 in the monitoring system no longer generates synchronization information, and the entire monitoring system can operate in the existing synchronization mode.

The following introduces specific structures of the data server 100 and the wireless access point 200 in some embodiments, as well as an interaction mode between the data server 100 and each wireless access point 200.

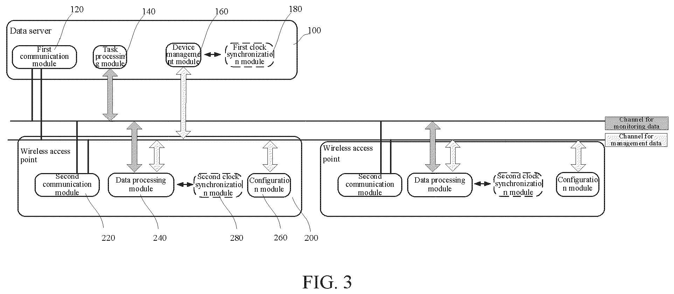

In some embodiments, as shown in FIG. 3, the data server 100 includes a first communication module 120, a task processing module 140, and a device management module 160. The wireless access point 200 includes a second communication module 220, a data processing module 240, and a configuration module 260.

Wherein, the first communication module 120 is configured to transmit device discovery information in a local area network where the data server 100 is arranged. The device discovery information includes a first communication channel of the data server 100, wherein the first communication channel can be obtained through various existing protocols and the likes. The second communication module 220 is configured to detect the device discovery information, which exists in the local area network where the wireless access point 200 is arranged. When the device discovery information is detected, the second communication module 220 parses the device discovery information to obtain the first communication channel, and then transmits a connection request to the data server 100 which corresponds to the first communication channel, according to the first communication channel. The connection request includes a second communication channel of the wireless access point 200, and the second communication channel can also be obtained through various existing protocols and the likes. Finally, the first communication module 120 establishes communication with the wireless access point 200 according to the first communication channel and the second communication channel, thereby realizing communicative connection between the data server 100 and the wireless access point 200.

The data processing module 240 is configured to receive monitoring data which is transmitted by at least one monitoring device 700, encapsulate the monitoring data to obtain a first protocol packet. In addition, the data processing module 240 also obtains an operation state of the wireless access point 200, generates management data according to the operation state, and encapsulates the management data to obtain a second protocol packet. The data processing module 240 also detects in real time or periodically whether the second communication module 220 establishes communication with the first communication module 120, and transmits the first protocol packet and the second protocol packet to the data server 100 when detecting that the data server 100 has established communication with the wireless access point 200 in response to the connection request. The task processing module 140 is configured to parse the first protocol packet which is transmitted by the wireless access point 200 to obtain the monitoring data, and the device management module 160 is configured to parse the second protocol packet which is transmitted by the wireless access point 200 to obtain the management data. It can be seen from the above description that, the task processing module 140 and the device management module 160 in the data server 100 can realize different functions, and a clear division of works can reduce the requirement on hardware.

In addition, the device management module 160 is also configured to obtain configuration information and transmit the configuration information to each wireless access point 200; then the configuration module 260 receives the configuration information which is transmitted by the data server 100 and configures the wireless access point 200 according to the configuration information. The configuration module 260 receives the configuration information which is transmitted by the data server 100 and configures the wireless access point 200 according to the configuration information.

In some embodiments, the data server 100 also includes a display module (unshown), which is configured to display monitoring data and/or management data. For example, the data server 100 can be the central station 400, and the display module is the display screen of the data server 100.

In some embodiments, the data server 100 further includes a first clock synchronization module 180, and the wireless access point 200 further includes a second clock synchronization module 280. The first clock synchronization module 180 is configured to set local time of the data server 100, and the second clock synchronization module 280 is configured to set local time of the wireless access point 200. The device management module 160 of the data server 100 is further configured to generate synchronization information which carries a timestamp, according to the local time of the data server 100, and transmit the synchronization information to the wireless access point 200. A data processing module 240 of the wireless access point 200 parses the synchronization information to obtain the timestamp, and the second clock synchronization module 280 calibrates local time of the wireless access point 200 according to the timestamp. Since all wireless access points 200 calibrate their local time according to the same synchronization information, time synchronization between different devices can be guaranteed.

In the above embodiment, the data server 100 can be used as the time synchronization device 600 to enable each wireless access point 200 to achieve time synchronization. In other embodiments, the data server 100 designates one wireless access point 200 as the time synchronization device 600. For example, the data server 100 may transmit a selection instruction to a wireless access point 200 with a smallest MAC address, thereby setting said wireless access point 200 as the "time synchronization device 600". Specifically, after the monitoring system is built up, the configuration module 260 of each wireless access point 200 detects whether it has received the selection instruction which is transmitted by the data server 100. When a wireless access point 200 receives the selection instruction, said wireless access point 200 is equivalent to being selected as a primary synchronization access point, and other wireless access points 200 naturally become secondary synchronization access points. The data processing module 240 of the primary synchronization access point is also configured to generate synchronization information which includes a timestamp, according to the local time of the wireless access point 200, and transmit the synchronization information to the secondary synchronization access points in the local area network. For the secondary synchronization access points, they are equivalent to not receiving the selection instruction but receiving the synchronization information. The data processing modules 240 of the secondary synchronization access points parse the synchronization information to obtain the timestamp, and the second clock modules of the secondary synchronization access points calibrate the local time of the secondary synchronization access points according to the timestamp.

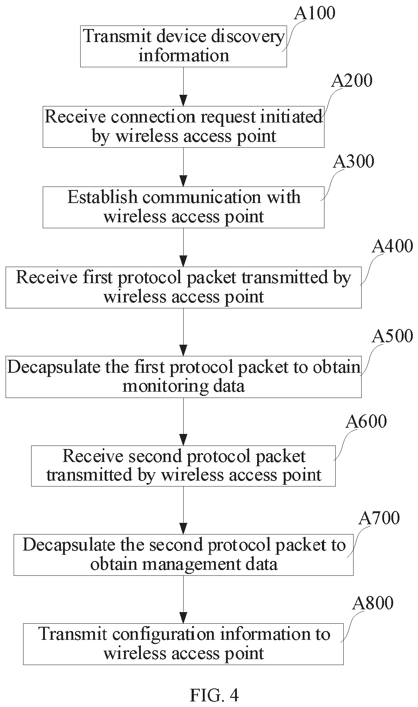

Please refer to the embodiment shown in FIG. 4, which provides a data interaction method for a data server 100 in a monitoring system, including following steps.

Step A100, transmit device discovery information to a local area network where the data server 100 is arranged. The device discovery information includes a first communication channel of the data server 100. The first communication channel may be obtained through a DHCP protocol or the likes.

Step A200, receive a connection request which is initiated by any one wireless access point 200 in the local area network according to the device discovery information, wherein the connection request includes a second communication channel of the wireless access point 200.

Step A300, establish communication with the wireless access point 200 according to the first communication channel and the second communication channel.

Step A400, receive a first protocol packet which is transmitted by the wireless access point 200, wherein the first protocol packet is obtained by the wireless access point 200 through encapsulating obtained monitoring data.

Each wireless access point 200 may receive monitoring data which is transmitted by at least one monitoring device 700. The first protocol packet may include a preset segment. For example, each monitoring device 700 has a corresponding device identifier, and the device identifier may represent information of the monitoring device 700, such as a type of the monitoring device 700 and the likes. The first protocol packet may include a plurality of device identifier segments, and each device identifier segment includes a plurality of character bits, and a value of each character bit is set to 0 or 1. A device identifier of one monitoring device 700 is represented by a character string in one device identifier segment. Each device identifier segment may be followed by a monitoring data segment, and monitoring data which corresponds to the monitoring device 700 is stored in the monitoring data segment. One first protocol packet may also include an access point identifier segment, and a character string in the access point identifier segment may be used to represent information of the wireless access point 200, such as at least one of a brand, model, mac address, IP address and communication channel of the wireless access point 200.

Step A500, decapsulate the first protocol packet to obtain the monitoring data.

Step A600, receive a second protocol packet which is transmitted by the wireless access point 200. The second protocol packet is obtained by the wireless access point 200 through encapsulating management data. The management data is generated by the wireless access point 200 according to its own operation state. The operation state includes but is not limited to a connection state between the wireless access point 200 and the monitoring device 700, whether the wireless access point 200 itself is operating normally, and other information. The second protocol packet may include a management data segment, and the access point identifier segment mentioned above. A structure of the management data segment may be similar to that of the above-mentioned monitoring data segment.

Step A700, decapsulate the second protocol packet to obtain the management data.

Step A800, obtain configuration information, and transmit the configuration information to the wireless access point 200 to complete a configuration of the wireless access point 200.

It can be seen from the above description that the above method realizes the function of the AC device on the data server 100, which is equivalent to turning the AC into software.

In some embodiments, the data server 100 also generates synchronization information which carries a timestamp, according to local time of the data server 100, and transmits the synchronization information to the wireless access point 200 to calibrate the local time of the wireless access point 200, wherein the timestamp is jointly generated by software and hardware, the software carries coarse synchronization, and the hardware carries fine synchronization.

In other embodiments, the data server 100 further selects a wireless access point 200 in the local area network as a primary synchronization access point according to a preset rule, and selects other wireless access points 200 in the local area network other than the primary synchronization access point as secondary synchronization access points. The primary synchronization access point is configured to generate synchronization information which carries a timestamp, according to its own local time, and transmit the synchronization information to the secondary synchronization access points. The secondary synchronization access points are configured to parse the synchronization information to obtain the timestamp and calibrate the local time of the secondary synchronization access points according to the timestamp.

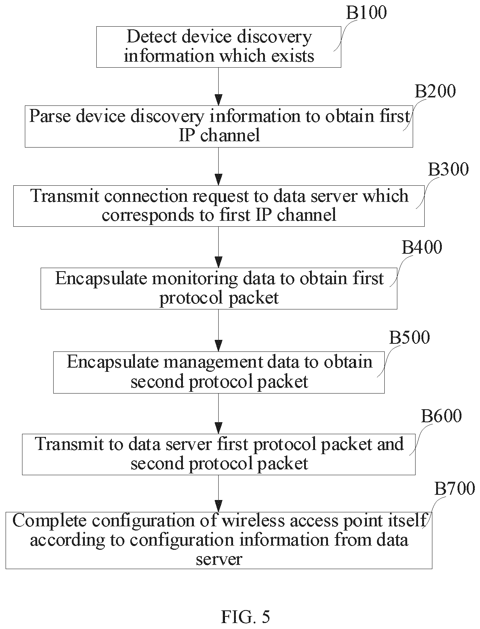

Please refer to the embodiment shown in FIG. 5, which provides a data interaction method for a wireless access point 200 in a monitoring system, including following steps.

Step B100, detect device discovery information which exists in a local area network where the wireless access point 200 is arranged. The device discovery information is transmitted by a data server 100 in the local area network, and the device discovery information includes a first communication channel of the data server 100.

Step B200, parse the device discovery information to obtain the first communication channel.

Step B300, transmit a connection request to the data server 100 which corresponds to the first communication channel, according to the first communication channel; wherein the connection request includes a second communication channel of the wireless access point 200. The second communication channel may also be obtained through a DHCP protocol or the like. Typically, after transmitting the connection request, the data server 100 establishes communication with the wireless access point 200 in response to the connection request.

Step B400, receive monitoring data, which is transmitted by at least one monitoring device 700, and encapsulate the monitoring data to obtain a first protocol packet.

Step B500, obtain an operation state of the wireless access point itself, generate management data according to the operation state, and encapsulate the management data to obtain a second protocol packet.

Step B600, transmit to the data server 100 the first protocol packet and the second protocol packet.

Step B700, receive configuration information which is transmitted by the data server 100, and complete a configuration of the wireless access point 200 itself according to the configuration information.

In some embodiments, the wireless access point 200 further detects that whether a selection instruction, which is transmitted by the data server 100, is received. When the selection instruction is received, synchronization information which includes a timestamp, is generated according to local time of the wireless access point 200, and the synchronization information is transmitted to other wireless access points 200 in the local area network. The timestamp in the synchronization information is configured to calibrate the local time of other wireless access points 200. When the selection instruction is not received, and the synchronization information, which is transmitted by another wireless access point 200 or the data server 100 in the local area network is received, the local time is calibrated according to the timestamp in the synchronization information. That is, the wireless access point 200 that receives the selection instruction can provide a reference for clock synchronization to other wireless access points 200, and the other wireless access points 200 implement time synchronization based on the reference. Each wireless access point 200 can provide a reference for clock synchronization to other wireless access points 200, and can also serve as a device that passively receives synchronization information.

The following is a summary of some of the solutions in the above examples.

For the virtual AC solution mentioned in some above embodiments, the function of the AC device is software-based, which can be an application that can be installed and run on a server, such as a central monitoring CMS. The device that implements the AC function can also be an independent device which is connected with a core switch 500, which is responsible for the management of all AP devices and CMS information interaction at the hospital level. The AC device configures functions of the AP device and time synchronization, acquires and stores wireless connection state and device operation state information which are uploaded by the AP device and the time synchronization unit (when the wireless access point 200 has the function of transmitting synchronization information, the wireless access point 200 also has a time synchronization unit). In this system, the devices with AC device functions (such as the central station 400 mentioned above) have hardware resource requirements and network access functions that meet the requirements, such that the entire network can be operated.

For the clock synchronization solutions mentioned in some above embodiments, the time synchronization Sync function is software-based. The time synchronization function can be an application that can run on other devices, such as anyone AP device. In addition, the clock synchronization Sync can also be an independent device which is connected with a core switch 500 and responsible for the clock synchronization reference of all AP devices and the AC device information interaction in the hospital level. The traditional clock synchronization solution is implemented through using independent hardware and is limited by constraints such as, a length of network cable, such that multiple synchronization units may need to be cascaded to complete functions and guarantee performance. In the above embodiment, a clock synchronization unit or a clock synchronization application is configured to transmit a protocol packet (synchronization information) with a timestamp; other AP devices parse the time synchronization protocol packet to obtain a time difference, and then make calibration (to keep the synchronization accuracy within a controllable range). The timestamp is jointly generated by software and hardware, the software carries the coarse synchronization, and the hardware carries the fine synchronization, and ultimately the time synchronization accuracy can be controlled within ±20us.

The solution proposed in the above embodiment simplifies a monitoring network architecture or a monitoring system in the hospital. Compared with the traditional one, only one or none clock synchronization Sync device and AC device are needed. The connection is simple, the engineering workload is small, the overall cost is low, the scalability and maintainability are good, and subsequent smooth upgrade and expansion requirements can be met after the first installation. There is no need to add AC devices, Sync hardware, and construction later. This is very suitable for task evolution from a single department to multiple departments, or even the entire hospital.

Those skilled in the art can understand that all or part of the functions of various methods in the above embodiments can be implemented by hardware or by computer programs. When all or part of the functions in the above embodiments are implemented by a computer program, the program can be stored in a computer-readable storage medium. The storage medium can include a read-only memory, a random-access memory, a magnetic disk, an optical disk, a hard disk, etc., and the above functions can be achieved through execution of this program through a computer. For example, the program is stored in a device memory, and when the program in the memory is executed by the processor, all or part of the above functions can be realized. In addition, when all or part of the functions in the above embodiments are implemented by a computer program, the program can also be stored in a storage medium, such as a server, another computer, a magnetic disk, an optical disk, a flash disk or a mobile hard disk, and can be downloaded or copied to save it into the memory of the local device, or to perform a version update on the system of the local device. When the program in the memory is executed by the processor, all, or part of the functions in the above embodiments can be realized.

The above specific examples, which are used to illustrate this disclosure, are only used to help understand this disclosure and are not intended to limit this disclosure. For those skilled in the art, the above specific implementations may be modified according to the concept of this disclosure.

## Claims

1. A data server(100) of a monitoring system, , comprising:
a first communication module(120), which module is configured to transmit device discovery information to a local area network where the data server(100) is arranged, wherein the device discovery information comprises a first communication channel of the data server(100); which module is also configured to receive a connection request which is initiated by any one wireless access point(200) in the local area network according to the device discovery information, wherein the connection request comprises a second communication channel of the wireless access point(200); and which module is further configured to establish communication with the wireless access point(200) according to the first communication channel and the second communication channel;
a task processing module(140), which is configured to decapsulate a first protocol packet which is transmitted by the wireless access point(200), so as to obtain monitoring data of a patient, wherein the first protocol packet is obtained by the wireless access point(200) through encapsulating the monitoring data received; and
a device management module(160), which module is configured to decapsulate a second protocol packet which is transmitted by the wireless access point(200), so as to obtain management data, wherein the management data is generated by the wireless access point(200) according to an operation state of the wireless access point(200) itself, the second protocol packet is obtained by the wireless access point(200) through encapsulating the management data; and which module is also configured to obtain configuration information, and transmit the configuration information to each wireless access point(200), so as to complete a configuration of each wireless access point(200).

2. The data server(100) according to claim 1, wherein
the data server(100) further comprises a display module, wherein the display module is configured to display the monitoring data and/or the management data; or
the first communication module(120) is further configured to establish communicative connection with a central station(400) in the monitoring system; the task processing module(140) is further configured to forward to the central station(400) the monitoring data which is obtained after decapsulation.

3. The data server(100) according to any one of claims 1-2, further comprising a first clock synchronization module(180), which is configured to set local time of the data server(100); wherein the device management module is further configured to generate synchronization information which carries a timestamp according to the local time of the data server(100), and configured to transmit the synchronization information to the wireless access point(200), wherein the timestamp in the synchronization information is configured to calibrate local time of each wireless access point(200).

4. The data server(100) according to any one of claims 1-2, wherein the data server(100) is further configured to select one wireless access point(200) in the local area network as a primary synchronization access point(200) according to a preset rule, and select other wireless access points(200) except the primary synchronization access point(200) in the local area network as secondary synchronization access points(200);
wherein the primary synchronization access point is configured to generate synchronization information which carries a timestamp according to local time of the primary synchronization access point(200) itself, and transmit the synchronization information to the secondary synchronization access points(200); the secondary synchronization access points(200) are configured to parse the synchronization information to obtain the timestamp and calibrate local time of the secondary synchronization access points(200) according to the timestamp.

5. A wireless access point(200) of a monitoring system, comprising:
a second communication module(220), which module is configured to detect device discovery information, which exists in a local area network where the wireless access point(200) is arranged, wherein the device discovery information is transmitted by a data server(100) in the local area network, and comprises a first communication channel of the data server(100); which module is also configured to parse the device discovery information to obtain the first communication channel; and which module is further configured to transmit, according to the first communication channel, a connection request to the data server(100) which corresponds to the first communication channel, wherein the connection request comprises a second communication channel of the wireless access point(200);
a data processing module(240), which is configured to receive monitoring data of a patient which is transmitted by at least one monitoring device(700), encapsulate the monitoring data to obtain a first protocol packet, obtain an operation state of the data processing module itself, generate management data according to the operation state, and encapsulate the management data to obtain a second protocol packet; wherein the data processing module(240) is further configured to transmit to the data server(100) the first protocol packet and the second protocol packet, when detecting that the data server(100) has established communication with the wireless access point(200) in response to the connection request; and
a configuration module(260), which is configured to receive configuration information which is transmitted by the data server(100), and complete a configuration of the wireless access point(200) according to the configuration information.

6. The wireless access point(200) according to claim 5, further comprising a second clock synchronization module(280), which is configured to set local time of the wireless access point(200);
the configuration module(260) is further configured to detect whether a selection instruction, which is transmitted by the data server(100), is received;
when the selection instruction is received, the data processing module(240) is further configured to generate synchronization information which carries a timestamp according to the local time of the wireless access point(200), and transmit said synchronization information to other wireless access points(200) in the local area network, wherein the timestamp in said synchronization information is configured to calibrate local time of said other wireless access points(200);
when the selection instruction is not received, and synchronization information, which is transmitted by another wireless access point(200) or the data server(100) in the local area network, is received; the second clock synchronization module(280) is configured to calibrate the local time of the wireless access point(200) according to the timestamp in said synchronization information.

7. A data interaction method for a data server(100) in a monitoring system, comprising:
transmitting device discovery information to a local area network where the data server(100) is arranged, wherein the device discovery information comprises a first communication channel of the data server(100);
receiving a connection request, which is initiated by any one wireless access point(200) in the local area network according to the device discovery information, wherein the connection request comprises a second communication channel of the wireless access point(200); and establishing communication with the wireless access point(200) according to the first communication channel and the second communication channel;
receiving a first protocol packet which is transmitted by the wireless access point(200), wherein the first protocol packet is obtained by the wireless access point(200) through encapsulating monitoring data of a patient obtained; and decapsulating the first protocol packet to obtain the monitoring data;
receiving a second protocol packet which is transmitted by the wireless access point(200), wherein the second protocol packet is obtained by the wireless access point(200) through encapsulating management data, wherein the management data is generated by the wireless access point(200) according to an operation state of the wireless access point(200) itself; and decapsulating the second protocol packet to obtain the management data; and
obtaining configuration information; and transmitting the configuration information to the wireless access point(200), so as to complete a configuration of the wireless access point(200).

8. The method according to claim 7, further comprising:
displaying the monitoring data and/or the management data; or
forwarding the monitoring data to a central station(400) in the monitoring system.

9. The method according to any one of claims 7-8, further comprising:
selecting one wireless access point(200) in the local area network as a primary synchronization access point according to a preset rule, and selecting other wireless access points(200) except the primary synchronization access point in the local area network as secondary synchronization access points;
generating, by the primary synchronization access point(200), synchronization information which carries a timestamp according to local time of the primary synchronization access point(200) itself; and transmitting, by the primary synchronization access point(200), the synchronization information to the secondary synchronization access points(200); and
parsing, by the secondary synchronization access points(200), the synchronization information to obtain the timestamp; and calibrating, by the secondary synchronization access points(200), local time of the secondary synchronization access points(200) according to the timestamp.

10. The method according to any one of claims 7-8, further comprising:
generating synchronization information which carries a timestamp according to local time of the data server(100); and
transmitting the synchronization information to the wireless access point(200), so as to calibrate local time of the wireless access point(200).

11. A data interaction method for a wireless access point(200) in a monitoring system, comprising:
detecting device discovery information which exists in a local area network where the wireless access point(200) is arranged, wherein the device discovery information is transmitted by a data server(100) in the local area network, and comprises a first communication channel of the data server(100);
parsing the device discovery information to obtain the first communication channel;
transmitting, according to the first communication channel, a connection request to the data server(100) which corresponds to the first communication channel, wherein the connection request comprises a second communication channel of the wireless access point(200);
receiving monitoring data of a patient which is transmitted by at least one monitoring device(700), and encapsulating the monitoring data to obtain a first protocol packet;
obtaining an operation state of the wireless access point(200) itself, generating management data according to the operation state, and encapsulating the management data to obtain a second protocol packet;
transmitting to the data server(100) the first protocol packet and the second protocol packet, when the data server(100) is detected to have established communication with the wireless access point(200) in response to the connection request; and
receiving configuration information which is transmitted by the data server(100), and completing a configuration of the wireless access point(200) according to the configuration information.

12. A monitoring system, comprising: a plurality of monitoring devices(700), a plurality of wireless access points(200) according to any of claims 5-6, and a data server(100) according to any of claims 1-4, which are sequentially in communicative connection.

13. The monitoring system according to claim 12, wherein
the data server(100) is a central station, and the data server(100) is further configured to display the monitoring data and/or the management data; or
the monitoring system further comprises a central station(400), wherein the data server(100) is further configured to forward to the central station(400) the monitoring data which is obtained after decapsulation, and the central station(400) is configured to display the monitoring data.

## Patentansprüche

1. Ein Datenserver (100) eines Überwachungssystems, umfassend: ein erstes Kommunikationsmodul (120), das so konfiguriert ist, dass es Gerätererkennungsinformationen an ein lokales Netzwerk überträgt, in dem der Datenserver (100) angeordnet ist, wobei die Gerätererkennungsinformationen einen ersten Kommunikationskanal des Datenservers (100) umfassen; das zudem so konfiguriert ist, dass es eine Verbindungsanfrage empfängt, die von einem beliebigen drahtlosen Zugangspunkt (200) im lokalen Netzwerk gemäß den Gerätererkennungsinformationen initiiert wird, wobei die Verbindungsanfrage einen zweiten Kommunikationskanal des drahtlosen Zugangspunkts (200) umfasst; und das ferner so konfiguriert ist, dass es gemäß dem ersten Kommunikationskanal und dem zweiten Kommunikationskanal eine Kommunikation mit dem drahtlosen Zugangspunkt (200) herstellt;
ein Aufgabenverarbeitungsmodul (140), das dazu ausgelegt ist, ein erstes Protokollpaket, das vom drahtlosen Zugangspunkt (200) übertragen wird, zu entkapseln, um Überwachungsdaten eines Patienten zu erhalten, wobei das erste Protokollpaket vom drahtlosen Zugangspunkt (200) durch Einkapselung der empfangenen Überwachungsdaten gewonnen wird;
und
ein Geräteverwaltungsmodul (160), das so konfiguriert ist, dass es ein zweites Protokollpaket, das vom drahtlosen Zugangspunkt (200) übertragen wird, entkapseln kann, um Verwaltungsdaten zu erhalten, wobei die Verwaltungsdaten vom drahtlosen Zugangspunkt (200) entsprechend einem Betriebszustand des drahtlosen Zugangspunkts (200) selbst erzeugt werden und das zweite Protokollpaket vom drahtlosen Zugangspunkt (200) durch Kapselung der Verwaltungsdaten gewonnen wird; und das zudem so konfiguriert ist, dass es Konfigurationsinformationen erhält und diese an jeden drahtlosen Zugangspunkt (200) überträgt, um die Konfiguration jedes drahtlosen Zugangspunkts (200) abzuschließen.

2. Der Datenserver (100) nach Anspruch 1, wobei der Datenserver (100) ferner ein Anzeigemodul umfasst, wobei das Anzeigemodul so konfiguriert ist, dass es die Überwachungsdaten und/oder die Verwaltungsdaten anzeigt; oder
das erste Kommunikationsmodul (120) ferner so konfiguriert ist, dass es eine Kommunikationsverbindung mit einer Zentralstation (400) im Überwachungssystem herstellt; das Aufgabenverarbeitungsmodul (140) ferner so konfiguriert ist, dass es die nach der Entkapselung erfassten Überwachungsdaten an die Zentralstation (400) weiterleitet.

3. Der Datenserver (100) gemäß einem der Ansprüche 1-2, der ferner ein erstes Docking-Synchronisationsmodul (180) umfasst, das dazu ausgelegt ist, die Ortszeit des Datenservers (100) einzustellen; wobei das Gerätemanagementmodul ferner dazu ausgelegt ist, Synchronisationsinformationen zu erzeugen, die einen Zeitstempel entsprechend der Ortszeit des Datenservers (100) enthalten, und dazu ausgelegt ist, die Synchronisationsinformationen an den drahtlosen Zugangspunkt (200) zu übertragen, wobei der Zeitstempel in den Synchronisationsinformationen dazu ausgelegt ist, die Ortszeit jedes drahtlosen Zugangspunkts (200) zu kalibrieren.

4. Der Datenserver (100) gemäß einem der Ansprüche 1 bis 2, wobei der Datenserver (100) ferner so konfiguriert ist, dass er gemäß einer voreingestellten Regel einen drahtlosen Zugangspunkt (200) im lokalen Netzwerk als primären Synchronisationszugangspunkt (200) auswählt, und andere drahtlose Zugangspunkte (200) im lokalen Netzwerk, mit Ausnahme des primären Synchronisationszugangspunkts (200), als sekundäre Synchronisationszugangspunkte (200) auszuwählen;
wobei der primäre Synchronisationszugangspunkt so konfiguriert ist, dass er Synchronisationsinformationen erzeugt, die einen Zeitstempel entsprechend der Ortszeit des primären Synchronisationszugangspunkts (200) selbst enthalten, und die Synchronisationsinformationen an die sekundären Synchronisationszugangspunkte (200) überträgt; die sekundären Synchronisationszugangspunkte (200) sind so konfiguriert, dass sie die Synchronisationsinformationen analysieren, um den Zeitstempel zu ermitteln, und die Ortszeit der sekundären Synchronisationszugangspunkte (200) entsprechend dem Zeitstempel kalibrieren.

5. Ein drahtloser Zugangspunkt (200) eines Überwachungssystems, umfassend:
ein zweites Kommunikationsmodul (220), welches so konfiguriert ist, dass es Geräterkennungsinformationen erfasst, die in einem lokalen Netzwerk vorhanden sind, in dem der drahtlose Zugangspunkt (200) angeordnet ist, wobei die Geräterkennungsinformationen von einem Datenserver (100) im lokalen Netzwerk übertragen werden und einen ersten Kommunikationskanal des Datenservers (100) umfassen; welches Modul ferner so konfiguriert ist, dass es die Geräterkennungsinformationen analysiert, um den ersten Kommunikationskanal zu ermitteln;
und das Modul ist ferner so konfiguriert, dass es gemäß dem ersten Kommunikationskanal eine Verbindungsanfrage an den Datenserver (100) überträgt, die dem ersten Kommunikationskanal entspricht, wobei die Verbindungsanfrage einen zweiten Kommunikationskanal des drahtlosen Zugangspunkts (200) t;
ein Datenverarbeitungsmodul (240), das so konfiguriert ist, dass es Überwachungsdaten eines Patienten empfängt, die von mindestens einem Überwachungsgerät (700) übertragen werden, die Überwachungsdaten kapseln, um ein erstes Protokollpaket zu erhalten, einen Betriebszustand des Datenverarbeitungsmoduls selbst ermitteln, Verwaltungsdaten entsprechend dem Betriebszustand erzeugen und die Verwaltungsdaten kapseln, um ein zweites Protokollpaket zu erhalten;
wobei das Datenverarbeitungsmodul (240) ferner dazu ausgelegt ist, das erste Protokollpaket und das zweite Protokollpaket an den Datenserver (100) zu übertragen, wenn es feststellt, dass der Datenserver (100) als Reaktion auf die Verbindungsanfrage eine Kommunikation mit dem drahtlosen Zugangspunkt (200) hergestellt hat; und
ein Konfigurationsmodul (260), das so konfiguriert ist, dass es vom Datenserver (100) übermittelte Konfigurationsinformationen empfängt und eine Konfiguration des drahtlosen Zugangspunkts (200) entsprechend den Konfigurationsinformationen durchführt.

6. Der drahtlose Zugangspunkt (200) gemäß Anspruch 5,
der ferner ein zweites Dock-Synchronisationsmodul (280) umfasst, das dazu ausgelegt ist, die Ortszeit des drahtlosen Zugangspunkts (200) einzustellen;
wobei das Konfigurationsmodul (260) ferner dazu ausgelegt ist, zu erkennen, ob ein vom Datenserver (100) übermittelter Auswahlbefehl empfangen wurde;
Wenn die Auswahlanweisung empfangen wird, ist das Datenverarbeitungsmodul (240) ferner so konfiguriert, dass es Synchronisationsinformationen erzeugt, die einen Zeitstempel entsprechend der Ortszeit des drahtlosen Zugangspunkts (200) enthalten, und diese Synchronisationsinformationen an andere drahtlose Zugangspunkte (200) im lokalen Netzwerk zu übertragen, wobei der Zeitstempel in den Synchronisationsinformationen dazu dient, die Ortszeit der anderen drahtlosen Zugangspunkte (200) zu kalibrieren;
Wird der Auswahlbefehl nicht empfangen und werden Synchronisationsinformationen empfangen, die von einem anderen drahtlosen Zugangspunkt (200) oder dem Datenserver (100) im lokalen Netzwerk gesendet werden, ist das zweite Dock-Synchronisationsmodul (280) so konfiguriert, dass es die lokale Zeit des drahtlosen Zugangspunkts (200) entsprechend dem Zeitstempel in den genannten Synchronisationsinformationen kalibriert.

7. Verfahren zur Dateninteraktion für einen Datenserver (100) in einem Überwachungssystem, umfassend:
das Senden von Gerätererkennungsinformationen an ein lokales Netzwerk, in dem der Datenserver (100) angeordnet ist, wobei die Gerätererkennungsinformationen einen ersten Kommunikationskanal des Datenservers (100) umfassen;
das Empfangen einer Verbindungsanfrage, die von einem beliebigen drahtlosen Zugangspunkt (200) im lokalen Netzwerk gemäß den Gerätererkennungsinformationen initiiert wird,
wobei die Verbindungsanfrage einen zweiten Kommunikationskanal des drahtlosen Zugangspunkts (200) umfasst; und Herstellen einer Kommunikation mit dem drahtlosen Zugangspunkt (200) gemäß dem ersten Kommunikationskanal und dem zweiten Kommunikationskanal;
Empfangen eines ersten Protokollpakets, das vom drahtlosen Zugangspunkt (200) gesendet wird, wobei das erste Protokollpaket vom drahtlosen Zugangspunkt (200) durch Kapselung von erfassten Überwachungsdaten eines Patienten gewonnen wird; und Entkapseln des ersten Protokollpakets, um die Überwachungsdaten zu gewinnen;
Empfangen eines zweiten Protokollpakets, das vom drahtlosen Zugangspunkt (200) gesendet wird, wobei das zweite Protokollpaket vom drahtlosen Zugangspunkt (200) durch Kapselung von Verwaltungsdaten gewonnen wird, wobei die Verwaltungsdaten vom drahtlosen Zugangspunkt (200) entsprechend einem Betriebszustand des drahtlosen Zugangspunkts (200) selbst erzeugt werden; und Entkapseln des zweiten Protokollpakets, um die Verwaltungsdaten zu gewinnen; und
Erhalten von Konfigurationsinformationen; und Senden der Konfigurationsinformationen an den drahtlosen Zugangspunkt (200), um eine Konfiguration des drahtlosen Zugangspunkts (200) abzuschließen.

8. Verfahren nach Anspruch 7, das ferner umfasst:
Anzeigen der Überwachungsdaten und/oder der Verwaltungsdaten; oder
Weiterleiten der Überwachungsdaten an eine Zentralstation (400) im Überwachungssystem.

9. Verfahren nach einem der Ansprüche 7 bis 8, das ferner umfasst:
Auswählen eines drahtlosen Zugangspunkts (200) im lokalen Netzwerk als primären Synchronisationszugangspunkt gemäß einer voreingestellten Regel und Auswählen anderer drahtloser Zugangspunkte (200) im lokalen Netzwerk, mit Ausnahme des primären Synchronisationszugangspunkts, als sekundäre Synchronisationszugangspunkte;
Erzeugen von Synchronisationsinformationen durch den primären Synchronisationszugangspunkt (200), die einen Zeitstempel gemäß der Ortszeit des primären Synchronisationszugangspunkts (200) selbst enthalten; und Übertragen der Synchronisationsinformationen durch den primären Synchronisationszugangspunkt (200) an die sekundären Synchronisationszugangspunkte (200); und das Analysieren der Synchronisationsinformationen durch die sekundären Synchronisationszugangspunkte (200), um den Zeitstempel zu ermitteln; und das Kalibrieren der Ortszeit der sekundären Synchronisationszugangspunkte (200) durch die sekundären Synchronisationszugangspunkte (200) entsprechend dem Zeitstempel.

10. Verfahren nach einem der Ansprüche 7 bis 8, das ferner umfasst:
Erzeugen von Synchronisationsinformationen, die einen Zeitstempel gemäß Ortszeit des Datenservers (100); und
das Senden der Synchronisationsinformationen an den drahtlosen Zugangspunkt (200), um die Ortszeit des drahtlosen Zugangspunkts (200) zu kalibrieren.

11. Verfahren zur Dateninteraktion für einen drahtlosen Zugangspunkt (200) in einem Überwachungssystem, umfassend:
Erfassen von Geräteerkennungsinformationen, die in einem lokalen Netzwerk vorhanden sind, in dem der drahtlose Zugangspunkt (200) angeordnet ist, wobei die Geräteerkennungsinformationen von einem Datenserver (100) im lokalen Netzwerk übertragen werden und einen ersten Kommunikationskanal des Datenservers (100) umfassen;
das Analysieren der Geräteerkennungsinformationen, um den ersten Kommunikationskanal zu ermitteln;
das Senden einer Verbindungsanfrage gemäß dem ersten Kommunikationskanal an den Datenserver (100), der dem ersten Kommunikationskanal entspricht, wobei die Verbindungsanfrage einen zweiten Kommunikationskanal des drahtlosen Zugangspunkts (200) umfasst;
Empfangen von Überwachungsdaten eines Patienten, die von mindestens einem Überwachungsgerät (700) übertragen werden, und Kapseln der Überwachungsdaten, um ein erstes Protokollpaket zu erhalten;
Ermitteln eines Betriebszustands des drahtlosen Zugangspunkts (200) selbst, Erzeugen von Verwaltungsdaten entsprechend dem Betriebszustand und Kapseln der Verwaltungsdaten, um ein zweites Protokollpaket zu erhalten; Senden des ersten Protokollpakets und des zweiten Protokollpakets an den Datenserver (100),
wenn festgestellt wird, dass der Datenserver (100) als Reaktion auf die Verbindungsanfrage eine Kommunikation mit dem drahtlosen Zugangspunkt (200) hergestellt hat; und
Empfangen von Konfigurationsinformationen, die vom Datenserver (100) übertragen werden, und Abschließen einer Konfiguration des drahtlosen Zugangspunkts (200) entsprechend den Konfigurationsinformationen.

12. Ein Überwachungssystem, umfassend: eine Vielzahl von Überwachungsgeräten (700), eine Vielzahl von drahtlosen Zugangspunkten (200) gemäß einem der Ansprüche 5-6 und einen Datenserver (100) gemäß einem der Ansprüche 1-4, die nacheinander in Kommunikationsverbindung stehen.

13. Überwachungssystem nach Anspruch 12, wobei der Datenserver (100) eine Zentralstation ist und der Datenserver (100) ferner dazu ausgelegt ist, die Überwachungsdaten und/oder die Verwaltungsdaten anzuzeigen; oder
das Überwachungssystem ferner eine Zentralstation (400) umfasst, wobei der Datenserver (100) ferner dazu ausgelegt ist, die nach der Entkapselung gewonnenen Überwachungsdaten an die Zentralstation (400) weiterzuleiten, und die Zentralstation (400) dazu ausgelegt ist, die Überwachungsdaten anzuzeigen.

## Revendications

1. Serveur de données (100) d'un système de surveillance, comprenant :
un premier module de communication (120), lequel module est configuré pour transmettre des informations de découverte de dispositif sur un réseau local sur lequel le serveur de données (100) est agencé, où les informations de découverte de dispositif comprennent un premier canal de communication du serveur de données (100) ; lequel module est également configuré pour recevoir une requête de connexion laquelle est initiée par un quelconque point d'accès sans fil (200) dans le réseau local selon les informations de découverte de dispositif, où la requête de connexion comprend un second canal de communication du point d'accès sans fil (200) ; et lequel module est en outre configuré pour établir une communication avec le point d'accès sans fil (200) selon le premier canal de communication et le second canal de communication ;
un module de traitement de tâche (140), lequel est configuré pour décapsuler un premier paquet de protocole lequel est transmis par le point d'accès sans fil (200), de sorte à obtenir des données de surveillance d'un patient, où le premier paquet de protocole est obtenu par le point d'accès sans fil (200) par encapsulation des données de surveillance reçues ; et
un module de gestion de dispositif (160), lequel module est configuré pour décapsuler un second paquet de protocole lequel est transmis par le point d'accès sans fil (200), de sorte à obtenir des données de gestion, où les données de gestion sont générées par le point d'accès sans fil (200) selon un état de fonctionnement du point d'accès sans fil (200) lui-même, le second paquet de protocole est obtenu par le point d'accès sans fil (200) par encapsulation des données de gestion ; et lequel module est également configuré pour obtenir des informations de configuration, et transmettre les informations de configuration à chaque point d'accès sans fil (200), de sorte à réaliser une configuration de chaque point d'accès sans fil (200).

2. Serveur de données (100) selon la revendication 1, où le serveur de données (100) comprend en outre un module d'affichage, où le module d'affichage est configuré pour afficher les données de surveillance et/ou les données de gestion ; ou
le premier module de communication (120) est en outre configuré pour établir une connexion de communication avec un poste central (400) dans le système de surveillance ; le module de traitement de tâche (140) est en outre configuré pour transférer au poste central (400) les données de surveillance qui sont obtenues après décapsulation.

3. Serveur de données (100) selon l'une quelconque des revendications 1 et 2, comprenant en outre un premier module de synchronisation d'horloge (180), lequel est configuré pour établir une heure locale du serveur de données (100) ; où le module de gestion de dispositif est en outre configuré pour générer des informations de synchronisation lesquelles intègrent un horodatage selon l'heure locale du serveur de données (100), et configuré pour transmettre les informations de synchronisation au point d'accès sans fil (200), où l'horodatage dans les informations de synchronisation est configuré pour étalonner une heure locale de chaque point d'accès sans fil (200).

4. Serveur de données (100) selon l'une quelconque des revendications 1 et 2, où le serveur de données (100) est en outre configuré pour sélectionner un point d'accès sans fil (200) dans le réseau local comme point d'accès de synchronisation principal (200) selon une règle préétablie, et sélectionner d'autres points d'accès sans fil (200) à l'exception du point d'accès de synchronisation principal (200) dans le réseau local comme points d'accès de synchronisation secondaires (200) ;
où le point d'accès de synchronisation principal est configuré pour générer des informations de synchronisation lesquelles intègrent un horodatage selon une heure locale du point d'accès de synchronisation principal (200) lui-même, et transmettre les informations de synchronisation aux points d'accès de synchronisation secondaires (200) ; les points d'accès de synchronisation secondaires (200) sont configurés pour analyser les informations de synchronisation afin d'obtenir l'horodatage et d'étalonner une heure locale des points d'accès de synchronisation secondaires (200) selon l'horodatage.

5. Point d'accès sans fil (200) d'un système de surveillance, comprenant :
un second module de communication (220), lequel module est configuré pour détecter des informations de découverte de dispositif, qui existent dans un réseau local sur lequel le point d'accès sans fil (200) est agencé, où les informations de découverte de dispositif sont transmises par un serveur de données (100) dans le réseau local, et comprennent un premier canal de communication du serveur de données (100) ; lequel module est également configuré pour analyser les informations de découverte de dispositif afin d'obtenir le premier canal de communication ; et lequel module est en outre configuré pour transmettre, selon le premier canal de communication, une requête de connexion au serveur de données (100) qui correspond au premier canal de communication, où la requête de connexion comprend un second canal de communication du point d'accès sans fil (200) ;
un module de traitement de données (240), lequel est configuré pour recevoir des données de surveillance d'un patient lesquelles sont transmises par au moins un dispositif de surveillance (700), encapsuler les données de surveillance afin d'obtenir un premier paquet de protocole, obtenir un état de fonctionnement du module de traitement de données lui-même, générer des données de gestion selon l'état de fonctionnement, et encapsuler les données de gestion afin d'obtenir un second paquet de protocole ; où le module de traitement de données (240) est en outre configuré pour transmettre au serveur de données (100) le premier paquet de protocole et le second paquet de protocole, lorsqu'il est détecté que le serveur de données (100) a établi une communication avec le point d'accès sans fil (200) en réponse à la requête de connexion ; et
un module de configuration (260), lequel est configuré pour recevoir des informations de configuration qui sont transmises par le serveur de données (100), et réaliser une configuration du point d'accès sans fil (200) selon les informations de configuration.

6. Point d'accès sans fil (200) selon la revendication 5, comprenant en outre un second module de synchronisation d'horloge (280), lequel est configuré pour établir une heure locale du point d'accès sans fil (200) ;
le module de configuration (260) est en outre configuré pour détecter si une instruction de sélection, laquelle est transmise par le serveur de données (100), est reçue ;
lorsque l'instruction de sélection est reçue, le module de traitement de données (240) est en outre configuré pour générer des informations de synchronisation lesquelles intègrent un horodatage selon l'heure locale du point d'accès sans fil (200), et transmettre lesdites informations de synchronisation à d'autres points d'accès sans fil (200) dans le réseau local, où l'horodatage dans lesdites informations de synchronisation est configuré pour étalonner une heure locale desdits autres points d'accès sans fil (200) ;
lorsque l'instruction de sélection n'est pas reçue, et que des informations de synchronisation, qui sont transmises par un autre point d'accès sans fil (200) ou le serveur de données (100) dans le réseau local, sont reçues, le second module de synchronisation d'horloge (280) est configuré pour étalonner l'heure locale du point d'accès sans fil (200) selon l'horodatage dans lesdites informations de synchronisation.

7. Méthode d'interaction de données destinée à un serveur de données (100) dans un système de surveillance, comprenant les étapes consistant à :
transmettre des informations de découverte de dispositif dans un réseau local sur lequel le serveur de données (100) est agencé, où les informations de découverte de dispositif comprennent un premier canal de communication du serveur de données (100) ;
recevoir une requête de connexion, laquelle est initiée par un quelconque point d'accès sans fil (200) dans le réseau local selon les informations de découverte de dispositif, où la requête de connexion comprend un second canal de communication du point d'accès sans fil (200) ; et établir une communication avec le point d'accès sans fil (200) selon le premier canal de communication et le second canal de communication ;
recevoir un premier paquet de protocole lequel est transmis par le point d'accès sans fil (200), où le premier paquet de protocole est obtenu par le point d'accès sans fil (200) par encapsulation de données de surveillance d'un patient obtenues ; et décapsuler le premier paquet de protocole pour obtenir les données de surveillance ;
recevoir un second paquet de protocole lequel est transmis par le point d'accès sans fil (200), où le second paquet de protocole est obtenu par le point d'accès sans fil (200) par encapsulation de données de gestion, où les données de gestion sont générées par le point d'accès sans fil (200) selon un état de fonctionnement du point d'accès sans fil (200) lui-même ; et décapsuler le second paquet de protocole pour obtenir les données de gestion ; et
obtenir des informations de configuration ; et transmettre les informations de configuration au point d'accès sans fil (200), de sorte à réaliser une configuration du point d'accès sans fil (200).

8. Méthode selon la revendication 7, comprenant en outre :
le fait d'afficher les données de surveillance et/ou les données de gestion ; ou
le fait de transférer les données de surveillance à un poste central (400) dans le système de surveillance.

9. Méthode selon l'une quelconque des revendications 7 et 8, comprenant en outre :
le fait de sélectionner un point d'accès sans fil (200) dans le réseau local comme point d'accès de synchronisation principal selon une règle préétablie, et de sélectionner d'autres points d'accès sans fil (200) à l'exception du point d'accès de synchronisation principal dans le réseau local comme points d'accès de synchronisation secondaires ;
le fait de générer, par le point d'accès de synchronisation principal (200), des informations de synchronisation lesquelles intègrent un horodatage selon une heure locale du point d'accès de synchronisation principal (200) lui-même ; et de transmettre, par le point d'accès de synchronisation principal (200), les informations de synchronisation aux points d'accès de synchronisation secondaires (200) ; et
le fait d'analyser, par les points d'accès de synchronisation secondaires (200), les informations de synchronisation afin d'obtenir l'horodatage ; et d'étalonner, par les points d'accès de synchronisation secondaires (200), une heure locale des points d'accès de synchronisation secondaires (200) selon l'horodatage.

10. Méthode selon l'une quelconque des revendications 7 et 8, comprenant en outre :
le fait de générer des informations de synchronisation lesquelles intègrent un horodatage selon une heure locale du serveur de données (100) ; et
le fait de transmettre les informations de synchronisation au point d'accès sans fil (200), de sorte à étalonner une heure locale du point d'accès sans fil (200).

11. Méthode d'interaction de données destinée à un point d'accès sans fil (200) dans un système de surveillance, comprenant les étapes consistant à :
le fait de détecter des informations de découverte de dispositif, qui existent dans un réseau local sur lequel le point d'accès sans fil (200) est agencé, où les informations de découverte de dispositif sont transmises par un serveur de données (100) dans le réseau local, et comprennent un premier canal de communication du serveur de données (100) ;
le fait d'analyser les informations de découverte de dispositif afin d'obtenir le premier canal de communication ;
le fait de transmettre, selon le premier canal de communication, une requête de connexion au serveur de données (100) qui correspond au premier canal de communication, où la requête de connexion comprend un second canal de communication du point d'accès sans fil (200) ;
le fait de recevoir des données de surveillance d'un patient qui sont transmises par au moins un dispositif de surveillance (700), et d'encapsuler les données de surveillance afin d'obtenir un premier paquet de protocole ;
le fait d'obtenir un état de fonctionnement du point d'accès sans fil (200) lui-même, de générer des données de gestion selon l'état de fonctionnement, et d'encapsuler les données de gestion afin d'obtenir un second paquet de protocole ;
le fait de transmettre au serveur de données (100) le premier paquet de protocole et le second paquet de protocole, lorsqu'il est détecté que le serveur de données (100) a établi une communication avec le point d'accès sans fil (200) en réponse à la requête de connexion ; et
le fait de recevoir des informations de configuration qui sont transmises par le serveur de données (100), et de réaliser une configuration du point d'accès sans fil (200) selon les informations de configuration.

12. Système de surveillance, comprenant : une pluralité de dispositifs de surveillance (700), une pluralité de points d'accès sans fil (200) selon l'une quelconque des revendications 5 et 6, et un serveur de données (100) selon l'une quelconque des revendications 1 à 4, qui sont successivement en connexion de communication.

13. Système de surveillance selon la revendication 12, dans lequel le serveur de données (100) est un poste central, et le serveur de données (100) est en outre configuré pour afficher les données de surveillance et/ou les données de gestion ; ou
le système de surveillance comprend en outre un poste central (400), où le serveur de données (100) est en outre configuré pour transférer au poste central (400) les données de surveillance qui sont obtenues après décapsulation, et le poste central (400) est configuré pour afficher les données de surveillance.
